# EUROPEAN PATENT APPLICATION

(11) **EP 2 184 461 A1**
(43) Date of publication of application: **12.05.2010**
(21) Application number: 08792122.7
(22) Date of filing: 01.08.2008
(51) Int. Cl.: F01N 7/18, F01N 7/08

(54) **EXHAUST PIPE CONNECTION STRUCTURE AND EXHAUST PIPE CONNECTION METHOD**

(30) Priority: 01.08.2007 JP 2007200973; 22.02.2008 JP 2008041438
(71) Applicant: Futaba Industrial Company Ltd., Okazaki-shi Aichi 444-8558 (JP)
(72) Inventor: TANAKA, Yoshiki, Okazaki-shi Aichi 444-8558 (JP); OHNO, Kazunari, Okazaki-shi Aichi 444-8558 (JP); SUDOH, Masayuki, Okazaki-shi Aichi 444-8558 (JP); SATO, Fumihiko, Okazaki-shi Aichi 444-8558 (JP); NAKAZAWA, Tetsuo, Okazaki-shi Aichi 444-8558 (JP)
(74) Representative: MacDougall, Alan John Shaw
(86) International application number: PCT/JP2008/063909
(87) International publication number: WO 2009/017235

(57) **Abstract**

An exhaust pipe connection structure for interconnecting a connection pipe and an exhaust pipe that are arranged in an exhaust system of an internal combustion engine. Either of the connection pipe or the exhaust pipe is inserted into the other, and the portion where the connection pipe and the exhaust pipe overlap each other is radially deformed and swaged.

## Description

### TECHNICAL FIELD

The present invention relates to an exhaust pipe connection structure and an exhaust pipe connection method for interconnecting an exhaust pipe and a connection pipe that are arranged in an exhaust system of an internal combustion engine.

### BACKGROUND ART

Conventionally, in an exhaust system of an internal combustion engine, an exhaust manifold, a converter and a silencer are arranged along a direction of exhaust gas flow and respectively connected via an exhaust pipe. Each of the exhaust pipe and the converter, and the exhaust pipe and the silencer, is interconnected by welding.

However, connection by welding is likely to concentrate stress in a welded portion. It is necessary to provide the exhaust pipe with a sufficient plate thickness in order to make the welded portion have a sufficient strength. Accordingly, there arises a weight reduction problem. Also, the whole circumference of the exhaust pipe must be welded in order to inhibit leak of exhaust gas. There is a problem in that it takes time in processing. Moreover, the welded portion and the vicinity are easy to preferentially corrode. Also, gas is produced during the welding operation. There is a problem in that the welding is not preferable in view of the work environment.

Thus, as noted in Patent Document 1, a connection method by press fitting is proposed instead of welding. For example, an exhaust pipe is pressed into a connection pipe integrated to an end plate of a silencer. At that time, the outer circumference of a main body cylindrical portion of the silencer is clamped and the outer circumference of the exhaust pipe is clamped to perform press fitting.
Patent Document 1: Unexamined Japanese Patent Publication No. 2005-194996

### DISCLOSURE OF THE INVENTION

### PROBLEMS TO BE SOLVED BY THE INVENTION

In the case of such conventional press fitting, it is necessary to clamp and press the outer circumference of a large object such as a converter and a silencer. Thus, the apparatus becomes large in size and requires a large acting force for a press force upon press fitting. There is a problem in that the apparatus becomes enlarged from the above point as well.

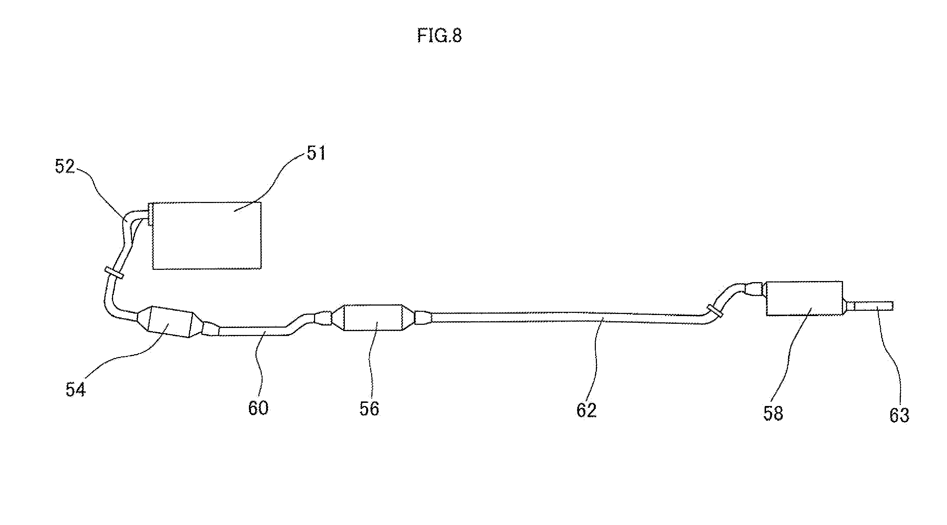

Also, as shown in FIG. 8, in the exhaust system of an internal combustion engine 51, exhaust pipes 60, 62 and 63 connect an exhaust manifold 52, a converter 54, silencers 56 and 58 and so on. Accordingly, the overall exhaust system along the exhaust gas flow is lengthened. When the connection is made by press fitting, desired geometry of the overall system after press fitting is difficult to be obtained. For example, when one of the converter 54 and the exhaust pipe 60 is pressed into the other, an error in angle after press fitting appears as a large dimension error in the silencer 58 on the downstream side since the length of the overall exhaust system along the exhaust gas flow is long. Due to influence of the shape and others after the press fitting, there has been a problem in that it is difficult to increase accuracy of the overall shape after press fitting.

One object of the present invention is to provide an exhaust pipe connection structure and an exhaust pipe connection method in which connection can be achieved by a small-sized apparatus and in which it is easy to increase the shape accuracy of the overall exhaust system.

### MEANS TO SOLVE THE PROBLEM

In order to achieve the above object, the present invention provides the following measures, that is, provides an exhaust pipe connection structure for interconnecting an exhaust pipe and a connection pipe that are arranged in an exhaust system of an internal combustion engine, in which one of the exhaust pipe and the connection pipe is inserted into the other, and the portion where the exhaust pipe and the connection pipe overlap each other is radially deformed and swaged.

At that time, a flange may be integrally formed at an end of the connection pipe, one of the exhaust pipe and the connection pipe may be inserted into the other, and the portion where the exhaust pipe and the connection pipe overlap each other may be deformed radially outward and swaged. Alternatively, the connection pipe may be provided in a silencer, one of the exhaust pipe and the connection pipe may be inserted into the other, and the portion where the exhaust pipe and the connection pipe overlap each other may be deformed radially inward and swaged. Also, upon swaging the overlap portion, it may be desirable to leave a non-swaged portion, or a small deformed portion which has a smaller radial deformation than the swaged portion, at both leading ends of the exhaust pipe and the connection pipe.

Moreover, both the exhaust pipe and the connection pipe have a circular cross section, one of the exhaust pipe and the connection pipe may be inserted into the other, and the portion where the exhaust pipe and the connection pipe overlap each other may be radially deformed from the circular cross section to a non-circular cross section, and swaged. At that time, the circular cross section may be deformed into the non-circular cross section having a polygonal shape to swage the overlap portion. Alternatively, the circular cross section may be deformed into the non-circular cross section having radially projecting bosses to swage the overlap portion.

The present invention also provides an exhaust pipe connection method for interconnecting an exhaust pipe and a connection pipe that are arranged in an exhaust system of an internal combustion engine, in which one of the exhaust pipe and the connection pipe is inserted into the other, and the portion where the exhaust pipe and the connection pipe overlap each other is radially deformed and swaged.

At that time, it may be desirable that the exhaust pipe and the connection pipe have generally the same diameter, one of the exhaust pipe and the connection pipe is inserted into the other having an expanded diameter, and the portion where the exhaust pipe and the connection pipe overlap each other is radially deformed and swaged. Also, it may be desirable that the connection pipe and a flange are integrally formed, one of the exhaust pipe and the connection pipe is inserted into the other, a mold member is inserted into an inner circumference side of the portion where the exhaust pipe and the connection pipe overlap each other, and the mold member is expanded so that the overlap portion is deformed radially outward and swaged. Alternatively, it may be desirable that the connection pipe is provided in a silencer, one of the exhaust pipe and the connection pipe is inserted into the other, a mold member is pressed against an outer circumference of the portion where the exhaust pipe and the connection pipe overlap each other, and the diameter of the overlap portion is reduced by the mold member so that the overlap portion is deformed radially inward and swaged. Also, upon swaging the overlap portion, it may be desirable to leave a non-swaged portion, or a small deformed portion which has a smaller radial deformation than the swaged portion, at both leading ends of the exhaust pipe and the connection pipe.

Moreover, both the exhaust pipe and the connection pipe have a circular cross section, one of the exhaust pipe and the connection pipe is inserted into the other, and the portion where the exhaust pipe and the connection pipe overlap each other may be radially deformed from the circular cross section into a non-circular cross section, and swaged. At that time, the circular cross section may be deformed into the non-circular cross section having a polygonal shape to swage the overlap portion. Alternatively, the circular cross section may be deformed into the non-circular cross section having radially projecting bosses to swage the overlap portion.

### EFFECT OF THE INVENTION

In the exhaust pipe connection structure according to the present invention, since the portion where the exhaust pipe and the connection pipe overlap each other is radially deformed and swaged, swaging can be achieved by a small-sized apparatus. Furthermore, by swaging after supporting the exhaust pipe and the connection pipe depending on the overall shape of the exhaust system, there is obtained an effect that the shape accuracy of the overall exhaust system can be easily increased.

Also, by deforming the portion where the connection pipe, to which a flange is integrally formed, and the exhaust pipe overlap each other radially outward to swage the overlap portion, the connection pipe and the exhaust pipe can be interconnected firmly. Furthermore, by deforming the portion where the connection pipe provided in the silencer and the exhaust pipe overlap each other radially inward to swage the overlap portion, the axially long exhaust pipe and the silencer having a large dimension can be easily interconnected. Also, upon swaging the overlap portion, by leaving a non-swaged portion, or a small deformed portion which has a smaller radial deformation than the swaged portion, at both leading ends of the exhaust pipe and the connection pipe, swaging strength can be increased. Furthermore, by deforming a circular cross section into a non-circular cross section to swage the overlap portion, twisting is not caused even if circumferential torsion is applied, and whereby loosening of swaging can be inhibited.

According to the exhaust pipe connection method of the present invention, since the portion where the exhaust pipe and the connection pipe overlap each other may be radially deformed and swaged, swaging can be achieved by a small-sized apparatus. Furthermore, by swaging after supporting the exhaust pipe and the connection pipe depending on the overall shape of the exhaust system, there is obtained an effect that the shape accuracy of the overall exhaust system can be easily increased.

Also, when the exhaust pipe and the connection pipe have generally the same diameter, by inserting one of the exhaust pipe and the connection pipe into the other having an expanded diameter and radially deforming the portion where the exhaust pipe and the connection pipe overlap each other to swage the overlap portion, a connection without a step at the inner circumference side can be achieved. Furthermore, by inserting the mold member into the inner circumference side so that the overlap portion is deformed radially outward and swaged, the connection pipe and the exhaust pipe can be interconnected firmly. Alternatively, by pressing the mold member against the outer circumference so that the overlap portion is deformed radially inward and swaged, the axially long exhaust pipe and the silencer having a larger dimension can be easily interconnected. Also, by leaving a non-swaged portion, or a small deformed portion which has a smaller radial deformation than the swaged portion, swaging strength can be increased. Furthermore, by deforming a circular cross section into a non-circular cross section to swage the overlap portion, twisting is not caused even if circumferential torsion is applied, and whereby loosening of swaging can be inhibited.

### BRIEF DESCRIPTION OF THE DRAWINGS

Fig. 1 is a cross-sectional view of the exhaust pipe connection structure according to an embodiment of the present invention.
Figs. 2(a), 2(b) and 2(c) are schematic diagrams showing a process sequence of the exhaust pipe connection method according to the embodiment of the present invention.
Fig. 3 is a cross-sectional view showing the exhaust pipe connection structure according to the second embodiment.
Figs. 4(a), 4(b) and 4(c) are schematic diagrams showing a process sequence of the exhaust pipe connection method according to the second embodiment.
Fig. 5 is a cross-sectional view showing the exhaust pipe connection structure as the third embodiment.
Fig. 6 is a cross-sectional view of line VI-VI taken in Fig. 5.
Fig. 7 is a cross-sectional view of the swaged portion as the fourth embodiment.
Fig. 8 is a schematic diagram showing an exhaust system of an internal combustion engine.

### EXPLANATION OF REFERENTIAL NUMERALS

1, 31...Exhaust pipe, 2, 34...Connection pipe, 4...Flange, 6, 36...Expanded diameter portion, 8...Female mold member, 10...Male mold member, 12...Holding hole, 14...Annular groove, 16...Projecting portion, 18...Tapered hole, 20...Tapered shaft, 22, 24...Non-swaged portion, 32...Side plate, 38, 42, 46...Mold member, 40...Molded cavity, 44...Bosses

### BEST MODE FOR CARRYING OUT THE INVENTION

The best mode to carry out the present invention is described in more detail below based on the accompanying drawings.

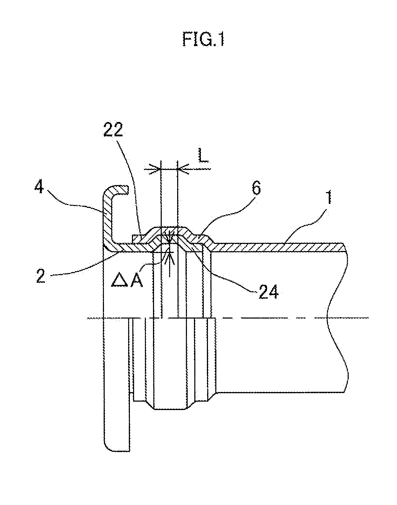

As shown in Fig. 1, numeral 1 denotes an exhaust pipe, and a connection pipe 2 is inserted into the exhaust pipe 1 for interconnection. A flange 4 is integrally formed in advance at one end side of the connection pipe 2 by, for example, press processing. Also, an expanded diameter portion 6 is formed in advance at one end of the exhaust pipe 1, so that the connection pipe 2 can be inserted therein. An outer circumference of the connection pipe 2 is inserted into an inner circumference of the expanded diameter portion 6, and the portion where the expanded diameter portion 6 and the connection pipe 2 overlap each other is radially swaged for interconnection.

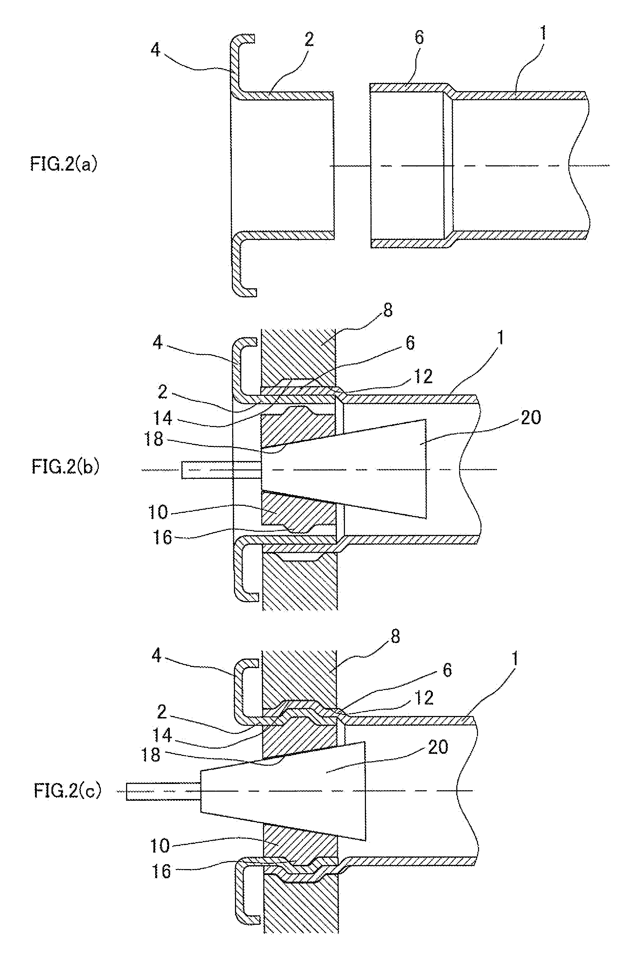

Next, an interconnecting method is described in order of processes by referring to Fig. 2. As shown in Fig. 2(a), the expanded diameter portion 6 is formed in advance by, for example, press processing at one end side of the exhaust pipe 1. In this embodiment, the exhaust pipe 1 and the connection pipe 2 have generally the same inner diameter, and the inner diameter of the expanded diameter portion 6 is expanded into the diameter which is generally the same as the outer diameter of the connection pipe 2.

It is desirable to form the expanded diameter portion 6 having the inner diameter slightly larger than the outer diameter of the connection pipe 2, so that the connection pipe 2 can be easily inserted into the expanded diameter portion 6. However, it is preferred that a gap between the inner circumference of the expanded diameter portion 6 and the outer circumference of the connection pipe 2 after the connection pipe 2 is inserted into the expanded diameter portion 6 is small. The axial length of the expanded diameter portion 6 is formed as being the length necessary for swaging as described below.

Then, as shown in Fig. 2 (b), the connection pipe 2 is inserted into the expanded diameter portion 6. Thereafter, a female mold member 8 is placed on the outer circumference of the expanded diameter portion 6, and a male mold member 10 is inserted into the inner circumference of the connection pipe 2. The female mold member 8 is divided into two parts, and by abutting the two parts, a holding hole 12, which has generally the same diameter as the outer diameter of the expanded diameter portion 6, is formed on the female mold member 8. The inner circumference of the holding hole 12 is hollowed around the entire circumference to form an annular groove 14 approximately in the center, leaving the holding hole 12 at both sides of the annular groove 14.

The male mold member 10 has a projecting portion 16 around the entire outer circumference thereof, and the outer circumference at both sides of the projecting portion 16 have a flat cylindrical shape. Also, a tapered hole 18 is formed in the axial center, and a tapered shaft 20 is inserted into the tapered hole 18. The male mold member 10 is divided into two or more parts along an axial direction, and the male mold member 10 is radially expanded by inserting the tapered shaft 20 into the tapered hole 18.

Next, as shown in Fig. 2 (c), the tapered shaft 20 is inserted into the tapered hole 18 to expand the male mold member 10 radially outward. By expanding the projecting portion 16 radially outward, the connection pipe 2 and the expanded diameter portion 6 are pushed radially outward. The expanded diameter portion 6 is pushed into the annular groove 14, thereby molding the outer circumference of the expanded diameter portion 6 depending on the shape of the annular groove 14.

Also, by the male mold member 10, the outer circumference of the connection pipe 2 is molded in such a manner as to be pressed against the inner circumference of the expanded diameter portion 6. At that time, the projecting portion 16 pushes the inner circumference of the connection pipe 2 radially outward, thereby pushing the connection pipe 2, together with the expanded diameter portion 6, into the annular groove 14. Accordingly, the portion where the expanded diameter portion 6 and the connection pipe 2 overlap each other is expanded radially outward and swaged.

As shown in Fig. 1, in the present embodiment, the swaged portion is formed generally in a trapezoidal shape, and the shape of a recess at the inner circumference side of the connection pipe 2 after swaging is formed such that a depth ΔA ranges from 0.3 mm to 30 % of the radius of the connection pipe 2 and an axial length L ranges from 5 to 100 mm.

With a depth ΔA smaller than 0.3mm, processing is difficult to be performed due to, for example, springback at a time of swaging processing, and with a depth ΔA larger than 30% of the radius, processing is difficult to be performed due to, for example, rapture. Also, with a length L smaller than 5 mm, swaging strength cannot be ensured, and with a length L larger than 100 mm, the axial length becomes too long, thereby increasing structural restriction.

Furthermore, in the present embodiment, swaging is performed so that non-swaged portions 22 and 24 are left at leading ends of the exhaust pipe 1 and the connection pipe 2. In other words, the outer circumference of the leading end of the expanded diameter portion 6 of the exhaust pipe 1 is not pressed against the inner circumference of the holding hole 12 of the female mold member 8, and is not pushed into the annular groove 14 to be swaged radially outward. Thus, the non-swaged portion 22 is left between the female mold member 8 and the male mold member 10. Similarly, at the leading end of the connection pipe 2 which is inserted in the expanded diameter portion 6, the non-swaged portion 24 is left between the female mold member 8 and the male mold member 10. By leaving the non-swaged portions 22 and 24, swaging strength can be ensured. The non-swaged portions 22 and 24 are not limited to the case in which no radial deformation is made, but may be left as a small deformed portion which has a smaller radial deformation than the depth ΔA of the swaged portion.

Thus, in the present embodiment, the connection pipe 2 is inserted into the expanded diameter portion 6 of the exhaust pipe 1, and then the portion where the expanded diameter portion 6 and the connection pipe 2 overlap each other is deformed radially outward and swaged. By swaging, leak of exhaust gas is inhibited, and the expanded diameter portion 6, of the exhaust pipe 1, and the connection pipe 2 are inhibited from being pulled out even if the force of pulling out is applied.

Since interconnection is achieved by swaging processing, in which the overlap portion is deformed radially outward, a large apparatus is not required for the swaging process by means of the female mold member 8 and the male mold member 10. Also, since a large acting force is not required either, the large apparatus which produces a large acting force is not required.

Although the expanded diameter portion 6 is formed in the exhaust pipe 1 in the present embodiment, conversely to this, the expanded diameter portion may be formed in the connection pipe 2 so that the exhaust pipe 1 is inserted into the connection pipe 2 and swaging processing is performed. Alternatively, although the swaging processing is performed by deforming the overlap portion radially outward, it is similarly feasible that deformation is made radially inward in the swaging processing.

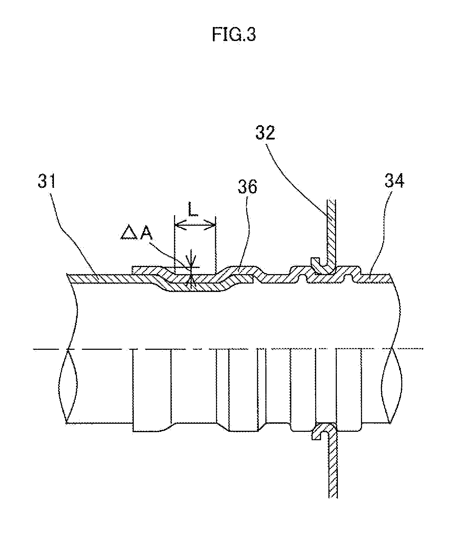

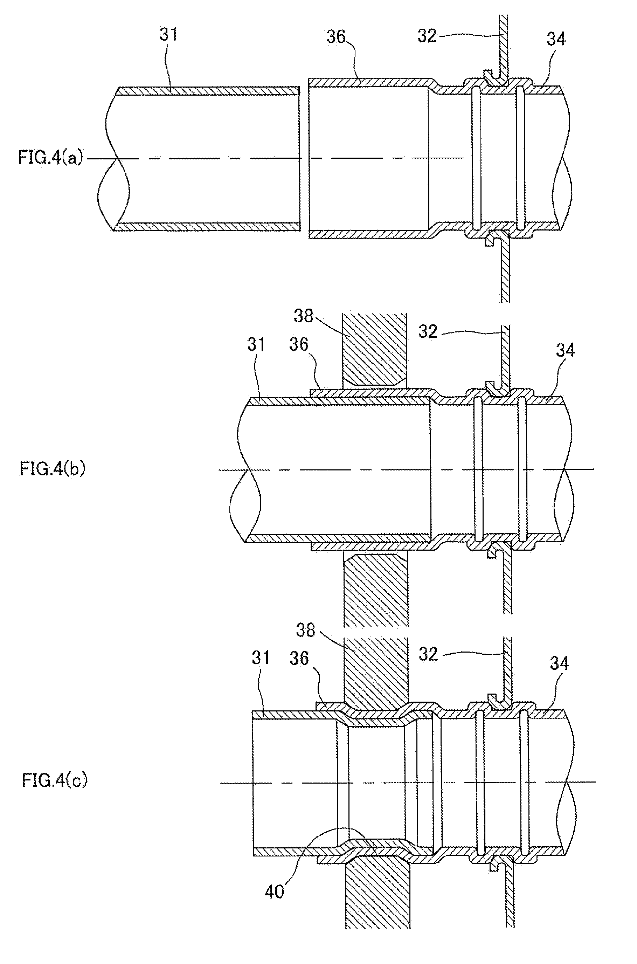

Next, a second embodiment which is different from the present embodiment as described above is explained by referring to Fig. 3 and Figs. 4(a) to (c). The second embodiment relates to interconnection between a silencer and an exhaust pipe 31. As shown in Fig. 3, the exhaust pipe 31 is interconnected to a connection pipe 34 (an inlet pipe or an outlet pipe) extending through a side plate 32 of the silencer.

In the present second embodiment, an expanded diameter portion 36, that is expanded radially so that the exhaust pipe 31 can be inserted thereinto, is formed in advance at the leading end side of the connection pipe 34 which projects outward from the side plate 32. An outer circumference of the exhaust pipe 31 is inserted into an inner circumference of the expanded diameter portion 36, and the portion where the exhaust pipe 31 and the expanded diameter portion 36 overlap each other is radially swaged for interconnection.

Next, a connection method is described in order of processes by referring to Figs. 4(a) to (c). As shown in Fig. 4(a), an expanded diameter portion 36 is formed in advance by, for example, press processing at the leading end side of the connection pipe 34. Also in the second embodiment, the exhaust pipe 31 and the connection pipe 34 have generally the same inner diameter, and the inner diameter of the expanded diameter portion 36 is expanded so as to be generally the same as the outer diameter of the exhaust pipe 31. Following formation of the expanded diameter portion 36 at the leading end side of the connection pipe 34, the connection pipe 34 is attached to the side plate 32 by, for example, swaging.

It is desirable that the inner diameter of the expanded diameter portion 36 is formed slightly larger than the outer diameter of the exhaust pipe 31 so that the exhaust pipe 31 can be smoothly inserted into the expanded diameter portion 36. Also, in this case, it is preferred that a gap between the outer circumference of the exhaust pipe 31 and the inner circumference of the expanded diameter portion 36 after the exhaust pipe 31 is inserted into the expanded diameter portion 36 is small. The axial length of the expanded diameter portion 36 is formed to be the length necessary for swaging as described below.

Then, as shown in Fig. 4(b), the exhaust pipe 31 is inserted into the expanded diameter portion 36, and thereafter a mold member 38 is placed on the outer circumference of the expanded diameter portion 36. The mold member 38 is composed of two parts, and as shown in Fig. 4(c), a molded cavity 40 is formed by abutting the two parts against the expanded diameter portion 36, and whereby the outer circumference of the expanded diameter portion 36 is pushed radially inward.

The expanded diameter portion 36 is deformed radially inward around the entire circumference. At the same time, the exhaust pipe 31 is also pushed via the expanded diameter portion 36 to be deformed radially inward. Thus, deforming is performed depending on the molded cavity 40. Accordingly, the diameter of the portion where the expanded diameter portion 36 and the exhaust pipe 31 overlap each other is reduced radially inward for swaging.
As shown in Fig. 3, also in the second embodiment, the swaged portion is formed into a generally trapezoidal shape. The shape of the recess at the outer circumference side of the connection pipe 34 after swaging is formed such that a depth ΔA ranges from 0.3 mm to 30 % of the radius of the connection pipe 34 and an axial length L ranges from 5 to 100 mm, as in the embodiment described above.

Although the expanded diameter portion 36 is formed in the connection pipe 34 in the second embodiment, conversely to this, the expanded diameter portion may be formed in the exhaust pipe 31 so that the exhaust pipe 31 is inserted into the connection pipe 34 and swaging processing is performed. Also, although the swaging processing is performed by deforming the overlap portion radially inward, if it is possible to insert a mold member into the inner circumference of the overlap portion, deformation may be made radially outward in the swaging processing.

As described above, in the present second embodiment, the exhaust pipe 31 is inserted into the expanded diameter portion 36 of the connection pipe 34, and the portion where the expanded diameter portion 36 and the exhaust pipe 31 overlap each other is deformed radially inward and swaged. By swaging, leak of exhaust gas is inhibited, and the expanded diameter portion 6, of the exhaust pipe 1, and the connection pipe 2 are inhibited from being pulled out even if the force of pulling out is applied.

Since interconnection is achieved by swaging processing, in which the overlap portion is deformed radially inward, a large apparatus is not required for the swaging processing by means of the mold member 38. Also, since a large acting force is not required either, the large apparatus which produces a large acting force is not required.

Also, since swaging by the mold member 38 can be performed from the outer circumference side, even when the exhaust pipe 31 is axially long and the silencer has a large dimension, a large apparatus is not required and interconnection can be easily made. Furthermore, while the exhaust pipe 31 is inserted into the connection pipe 34 of a converter or a silencer, overall shape dimension accuracy is ensured. Then, after being fixed to and supported by, for example, a jig, swaging by the mold member 38 is performed from the outer circumference side. Therefore, overall shape dimension accuracy can be easily ensured. In addition, since interconnection can be achieved even in confined spaces, an exhaust system can be assembled at a side of a vehicle assembly line. Accordingly, an exhaust system can be easily assembled at the side of the assembly line after components are delivered in a separate state to the side of the assembly line.

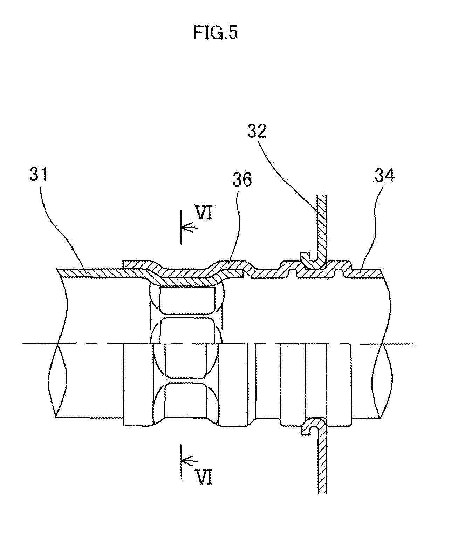

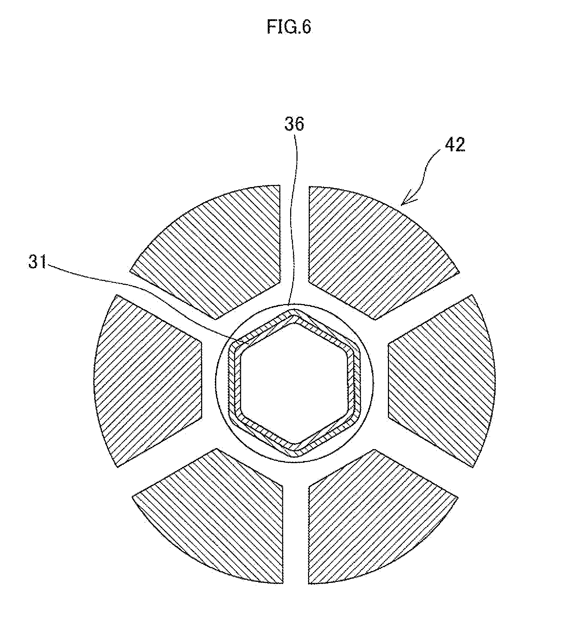

Next, the third embodiment which is different from the embodiments described above is described by referring Figs. 5 and 6. The third embodiment, similar to the second embodiment, relates to interconnection between a silencer and an exhaust pipe 31. As shown in Fig. 5, the exhaust pipe 31 is interconnected to a connection pipe 34 (an inlet pipe or an outlet pipe) extending through a side plate 32 of the silencer. Also, an expanded diameter portion 36 that is radially expanded so that the exhaust pipe 31 can be inserted thereinto is formed in advance at the leading end side of the connection pipe 34 projecting outward from the side plate 32. An outer circumference of the exhaust pipe 31 is inserted into an inner circumference of the expanded diameter portion 36, and the portion where the exhaust pipe 31 and the expanded diameter portion 36 overlap each other is radially swaged for interconnection.

In the third embodiment, both the exhaust pipe 31 and the expanded diameter portion 36 of the connection pipe 34 has a circular cross section, which is deformed into a non-circular cross section upon swaging. In the third embodiment, as shown in Fig. 6, the cross section is deformed into a hexagonal shape by a mold member 40 to swage the overlap portion.

The mold member 40 is divided into 6 parts. By moving each part of the mold member 40 toward the axial center, the portion where the exhaust pipe 31 and the expanded diameter portion 36 overlap each other is deformed radially inward to mold the cross section into a hexagonal shape. Accordingly, the inner circumference of the expanded diameter portion 36 of the connection pipe 34 is closely attached to the outer circumference of the exhaust pipe 31 and swaging is performed. At that time, swaging is performed without inserting, for example, a mold into the inner circumference side of the exhaust pipe 31. The cross section is not limited to be molded into a non-circular, hexagonal shape, but may be molded into the other polygonal shapes such as an octagonal or decagonal shape.

Thus, in the third embodiment, the portion where the expanded diameter portion 36 and the exhaust pipe 31 overlap each other is deformed radially inward and swaged. By swaging, leak of exhaust gas is inhibited, and the expanded diameter portion 6, of the exhaust pipe 1, and the connection pipe 2 are inhibited from being pulled out even if the force of pulling out is applied.

By deforming the cross section into a polygonal shape such as a hexagonal shape, twisting is not caused even if circumferential torsion is applied between the exhaust pipe 31 and the connection pipe 34, thereby inhibiting slippage between the exhaust pipe 31 and the connection pipe 34 to loosen swaging.

Also, since interconnection is achieved by swaging processing, in which the overlap portion is deformed radially inward, the swaging process by means of the mold member 40 does not require a large apparatus. Also, since a large acting force is not required either, the large apparatus which produces a large acting force is not required.

Also, similar to the second embodiment, since swaging can be performed from the outer circumference side by the mold member 40, even when the exhaust pipe 31 is axially long and the silencer has a large dimension, a large apparatus is not required and interconnection can be easily made.

Furthermore, by swaging from the outer circumference side by the mold member 40, overall shape dimension accuracy can be easily ensured. In addition, since interconnection can be achieved even in confined spaces, an exhaust system can be assembled at a side of a vehicle assembly line. Accordingly, an exhaust system can be easily assembled at the side of the assembly line after components are delivered in a separate state to the side of the assembly line.

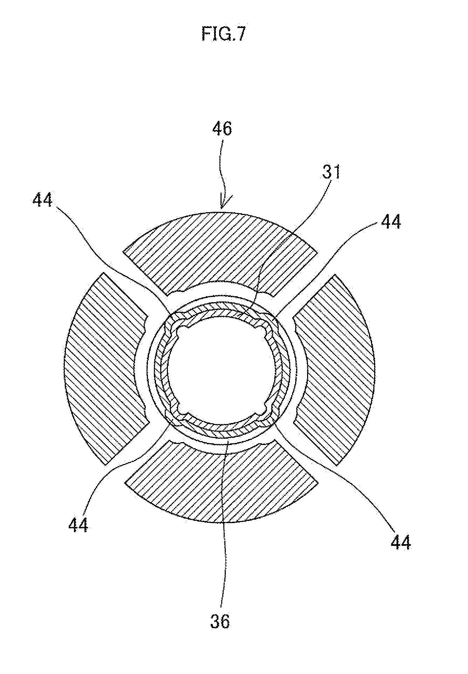

Next, the fourth embodiment which is different from the embodiments described above is explained by referring to Fig. 7. In the third embodiment, deformation is made into a polygonal, non-circular shape to perform swaging. In the fourth embodiment, by forming bosses 44 radially, deformation is made into a non-circular shape to perform swaging.

As shown in Fig. 7, a plurality of bosses 44 projecting radially outward is formed on the portion where the expanded diameter portion 36 and the exhaust pipe 31 overlap each other. The bosses 44 are formed by a mold member 46. The mold member 46 is divided into four parts depending on the positions of four bosses 44. The bosses 44 are formed between each of the divided parts of the mold member 46. A pair of the divided parts is pressed against the outer circumference of the expanded diameter portion 36 so that the expanded diameter portion 36 and the exhaust pipe 31 are deformed radially inward and swaged. At the same time of swaging, the bosses 44 are formed.

Also in the fourth embodiment, by swaging, leak of exhaust gas is inhibited. At the same time, when the force of pulling out the exhaust pipe 31 and the connection pipe 34 is applied, since the pipes 31 and 34 are deformed radially inward, those pipes are inhibited from being pulled out.

Also, when the force that circumferentially twists the exhaust pipe 31 and the connection pipe 34 is applied, since the cross section is in a non-circular shape due to the presence of the bosses 44, slippage between the inner circumference of the expanded diameter portion 36 and the outer circumference of the exhaust pipe 31 is not caused by twisting. Thus, by swaging, air tightness of exhaust gas can be maintained, and pulling out and twisting caused by an external force can be inhibited.

Also in the fourth embodiment, since interconnection is achieved by swaging processing, in which the overlap portion is deformed radially, the swaging processing does not require a large apparatus. Also, since a large acting force is not required either, the large apparatus which produces a large acting force is not required.

Also, similar to the third embodiment, since swaging can be performed from the outer circumference side by the mold member 46, even when the exhaust pipe 31 is axially long and the silencer has a large dimension, a large apparatus is not required and interconnection can be easily made. Furthermore, by swaging from the outer circumference side by the mold member 46, overall shape dimension accuracy can be easily ensured. In addition, since interconnection can be achieved even in confined spaces, an exhaust system can be interconnected at a side of a vehicle assembly line. Accordingly, an exhaust system can be easily assembled at the side of the assembly line after components are delivered in a separate state to the side of the assembly line.

The present invention shall not be limited to the embodiments described above, and can be implemented in various aspects in a range without departing from the gist of the present invention.

## Claims

1. An exhaust pipe connection structure for interconnecting an exhaust pipe and a connection pipe that are arranged in an exhaust system of an internal combustion engine,
wherein one of the exhaust pipe and the connection pipe is inserted into the other, and
a portion where the exhaust pipe and the connection pipe overlap each other is radially deformed and swaged.

2. The exhaust pipe connection structure according to claim 1,
wherein a flange is integrally formed at an end of the connection pipe,
one of the exhaust pipe and the connection pipe is inserted into the other, and
the portion where the exhaust pipe and the connection pipe overlap each other is deformed radially outward and swaged.

3. The exhaust pipe connection structure according to claim 1,
wherein the connection pipe is provided in a silencer,
one of the exhaust pipe and the connection pipe is inserted into the other, and
the portion where the exhaust pipe and the connection pipe overlap each other is deformed radially inward and swaged.

4. The exhaust pipe connection structure according to any of claims 1 to 3,
wherein upon swaging the overlap portion, a
non-swaged portion, or a small deformed portion which has a smaller radial deformation than the swaged portion, is left at both leading ends of the exhaust pipe and the connection pipe.

5. The exhaust pipe connection structure according to any of claims 1 to 4,
wherein both the exhaust pipe and the connection pipe have a circular cross section, and one of the exhaust pipe and the connection pipe is inserted into the other, and
the portion where the exhaust pipe and the connection pipe overlap each other is radially deformed from the circular cross section into a non-circular cross section, and swaged.

6. The exhaust pipe connection structure according to claim 5,
wherein the circular cross section is deformed into the non-circular cross section having a polygonal shape, and swaged.

7. The exhaust pipe connection structure according to claim 5,
wherein the overlap portion is deformed from the circular cross section into the non-circular cross section having radially projecting bosses, and swaged.

8. An exhaust pipe connection method for interconnecting an exhaust pipe and a connection pipe that are arranged in an exhaust system of an internal combustion engine,
wherein one of the exhaust pipe and the connection pipe is inserted into the other, and
a portion where the exhaust pipe and the connection pipe overlap each other is radially deformed and swaged.

9. The exhaust pipe connection method according to claim 8,
wherein both the exhaust pipe and the connection pipe have generally a same diameter, and one of the exhaust pipe and the connection pipe is inserted into the other having an expanded diameter, and
the portion where the exhaust pipe and the connection pipe overlap each other is radially deformed and swaged.

10. The exhaust pipe connection method according to claim 8 or 9,
wherein the connection pipe and a flange are integrally formed,
one of the exhaust pipe and the connection pipe is inserted into the other, and
a mold member is inserted into an inner circumference side of the portion where the exhaust pipe and the connection pipe overlap each other, and the mold member is expanded so that the overlap portion is deformed radially outward and swaged.

11. The exhaust pipe connection method according to claim 8 or 9,
wherein the connection pipe is provided in a silencer,
one of the exhaust pipe and the connection pipe is inserted into the other, and
the mold member is pressed against an outer circumference of the portion where the exhaust pipe and the connection pipe overlap each other, thereby reducing a diameter by the mold member so that the overlap portion is deformed radially inward and swaged.

12. The exhaust pipe connection method according to any of claims 8 to 11,
wherein upon swaging the overlap portion, a non-swaged portion, or a small deformed portion which has a smaller radial deformation than the swaged portion, is left at both leading ends of the exhaust pipe and the connection pipe.

13. The exhaust pipe connection method according to any of claims 8 to 12,
wherein both the exhaust pipe and the connection pipe have a circular cross section, and one of the exhaust pipe and the connection pipe is inserted into the other, and
the portion where the exhaust pipe and the connection pipe overlap each other is radially deformed from the circular cross section into a non-circular cross section, and swaged.

14. The exhaust pipe connection method according to claim 13,
wherein the overlap portion is deformed from the circular cross section into the non-circular cross section having a polygonal shape, and swaged.

15. The exhaust pipe connection method according to claim 13,
wherein the overlap portion is deformed from the circular cross section into the non-circular cross section having radially projecting bosses, and swaged.
